# EUROPEAN PATENT SPECIFICATION

(11) **EP 1 935 718 B1**
(45) Date of publication and mention of the grant of the patent: **09.12.2015**
(21) Application number: 07024372.0
(22) Date of filing: 17.12.2007
(51) Int. Cl.: B60R 1/00

(54) **Apparatus including a mirror assembly**
Vorrichtung mit einer Spiegelanordnung
Appareil doté d'un ensemble miroir

(30) Priority: 20.12.2006 GB 0625340
(43) Date of publication of application: 25.06.2008
(60) Divisional application: 15190842.3
(73) Proprietor: Milenco Limited, Wolverton Mill Milton Keynes MK12 5TS (GB)
(72) Inventor: Milbank, Frederick Nigel, Milton Keynes MK 13 0RA (GB)
(74) Representative: Turner, Richard Charles

(56) References cited:
- EP-A1- 1 334 873
- DE-C1- 3 411 631
- NL-A- 9 002 818
- US-A- 5 870 236

## Description

This invention relates to apparatus including a mirror assembly. Such apparatus can be used by vehicle drivers, for example when the driver is towing a wide load and needs an extension to their conventional wing mirror.

If a vehicle driver is towing a wide load, such as a car with a caravan, then it is advantageous, and in some jurisdictions a legal requirement, that the conventional vehicle wing mirror be extended, in order for the vehicle driver to be able to see behind and along the side of the wide load. To achieve this, it is known to provide apparatus, sometimes referred to as a towing mirror, which includes a mirror and a device for fixing that mirror to the conventional wing mirror. German Patent DE 34111631 C1 shows such a towing mirror. However, as vehicle design becomes more complicated and elaborate, there is a difficulty providing a towing mirror that will fit all, or at least the vast majority, of wing mirror designs.

It is therefore an object of the invention to improve upon the known art.

According to a first aspect of the present invention, there is provided apparatus comprising a mirror assembly, an arm connected to the mirror assembly, and a bracket mounted on the arm, the bracket comprising a clamp for connecting to a vehicle wing mirror, characterised in that the clamp is rotatable about an axis substantially perpendicular to the arm and the apparatus further comprises a second bracket mounted on the arm, the second bracket comprising a clamp for connecting to a vehicle wing mirror, wherein the clamp is rotatable about an axis substantially perpendicular to the arm

Owing to this aspect of the invention, it is possible to provide a bracket which mounts the apparatus (a towing mirror) on virtually all current designs of wing mirror. By being rotatable relative to the arm of the apparatus, the clamp of the bracket can be adjusted to the local shape of the vehicle wing mirror to which it is being fixed.

The apparatus further comprises a second bracket mounted on the arm, the second bracket comprising a clamp for connecting to a vehicle wing mirror, wherein the clamp is rotatable about an axis substantially perpendicular to the arm. The provision of two brackets on the arm provides a towing mirror that can be very securely fastened to a vehicle wing mirror.

Advantageously, the clamp comprises a frame and a movable clamping member, the clamping member including an engaging portion, the engaging portion is connected to a shaft and is turnably mounted on the shaft, and one of the frame and the engaging portion includes a guiding slot, and the other of the frame and the engaging portion includes a guiding element engaging in the guiding slot.

Therefore, it is possible to provide a clamp with a guiding arrangement so that the engaging portion of the clamping member is relatively easy to keep on position when the clamp is being opened and closed.

Embodiments of the present invention will now be described, by way of example only, with reference to the accompanying drawings, in which:-
Figure 1 is a front view of apparatus including a mirror assembly,
Figure 2 is a side view of the apparatus of Figure 1,
Figures 3 to 5 show alternative arrangements of the apparatus of Figure 2, and
Figure 6 is a front view of apparatus of Figure 1, in use.

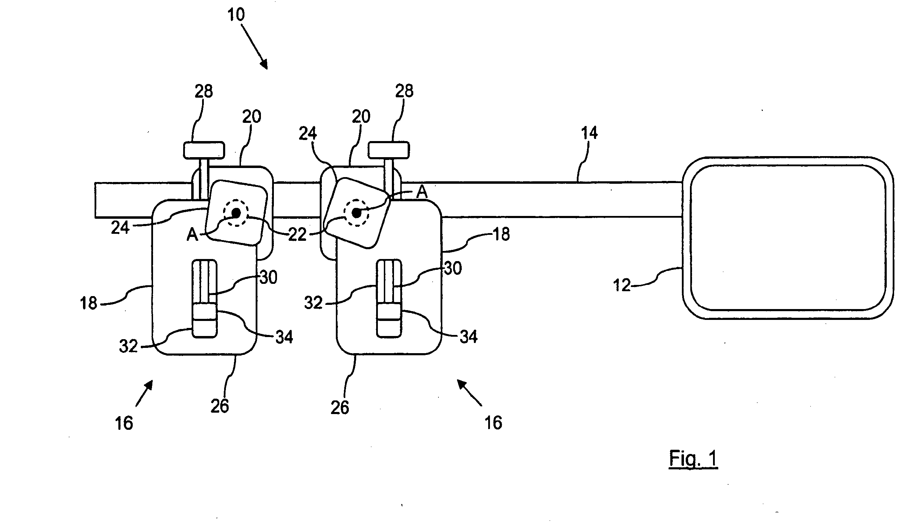

Figure 1 shows the apparatus 10, which comprising a mirror assembly 12, an arm 14 connected to the mirror assembly 12, and two brackets 16 mounted on the arm 14. Each bracket 16 comprises a clamp 18 for connecting to a vehicle wing mirror (not shown), and each clamp 18 is rotatable about an axis A, the axis A being substantially perpendicular to the arm 14. The apparatus 10 is shown with two brackets 16, as a preferred embodiment, but the apparatus 10 could equally well be provided with only a single bracket 16.

Each bracket 16 also includes a fixing portion 20 for connecting the respective bracket 16 directly to the arm 14 of the apparatus 10, and a shaft 22 for connecting the clamp 18 to the fixing portion 20. The clamp 18 is rotatable about the shaft 22. Each bracket 16 also includes a locking element 24 for preventing rotation of the clamp 20.

The shaft 22, with the locking element 24 fixably mounted thereto can be a screw-thread that the clamp 18 will rotate about. The locking element 24 can be unscrewed to allow the clamp 18 to be rotated into position, and then the locking element 24 can be retightened to fix the clamp 18 in position, so that the clamp 18 can no longer move relative to the arm 14.

Since the apparatus 10 is designed as a towing mirror, a wide variety of different shapes of vehicle wing mirror can have the apparatus 10 fixed thereto. The provision of the rotation of the clamp 18 on each bracket 16 allows each clamp 18 to be positioned to best suit the local shape of the vehicle wing mirror to which the bracket 16 is being fixed. In particular, since there are provided two brackets 16 in the embodiment of Figure 1, and both have clamps 18 that are rotatable independently of each other, a vehicle wing mirror with a varying shape can be connected to, without any impact on the performance of the towing mirror. Such a connection is relatively easy for a user to make themselves without any specialist assistance.

The apparatus 10 is designed to fit to a wing mirror of a vehicle such as a car. The apparatus 10 allows the driver of the car to be able to see behind them, by extending the mirror assembly 12 out and beyond a wide load that the car may be towing. The arm 14 of the apparatus 10 extends in the same plane as the mirror assembly 12, out to the side of the mirror assembly 12, and is at least twice the length of the mirror assembly 12. The arm 14 is also, at least twice as long as the brackets 16 are wide, so that it can support at least two brackets 16. The arm 14 is an elongate rod-like construction, which mounts the brackets 16 so that they are alongside the mirror assembly 12.

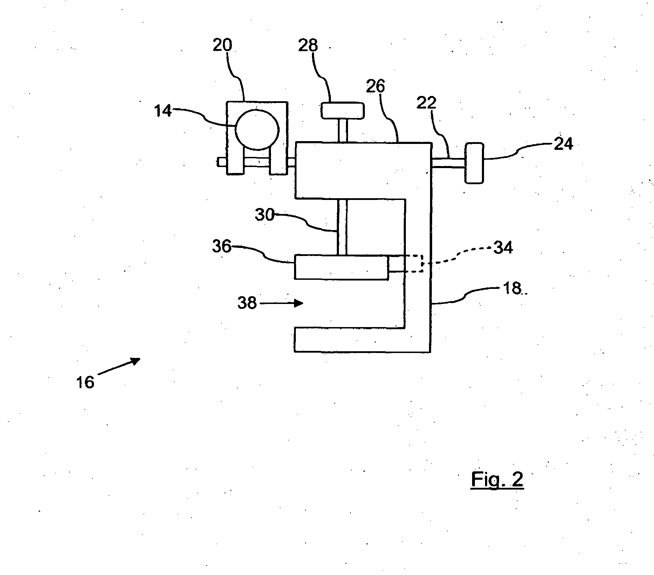

Each clamp 18 comprises a frame 26 and a movable clamping member 28, the clamping member 28 including an engaging portion (shown in Figure 2). The engaging portion is connected to a shaft 30 and is turnably mounted on the shaft 30. The frame includes a guiding slot 32, and the engaging portion includes a guiding element 34 engaging in the guiding slot 32. The purpose of the guiding element 34 and the slot 32 is to assist in the locating and moving of the engaging portion.

Figure 2 shows this engaging portion 36, in a side view of the apparatus 10 of Figure 1, with the mirror assembly 12 removed for clarity. The bracket 16 comprises the clamp 18, the fixing portion 20 and the shaft 22. The clamp 18 can turn about the shaft 22, and the locking element 24 is used to tighten the clamp 18 against the fixing portion 20, when the correct position has been chosen by a user.

The user turns the shaft 30 via the knob of the clamping member 28 and this raises and lowers the engaging portion 36, which is loosely mounted on the shaft 30. This allows the engaging portion 36 to move in such away that the bottom surface of the portion 36 is no longer horizontal. The guiding element 34 can be seen engaging with the slot of the g-clamp 18. Since the engaging portion 36 is moveable on the end of the shaft 30, the guiding arrangement assists the user in the locating of the bracket on the vehicle wing mirror. The gap 38 in Figure 2 shows where a vehicle wing mirror would be secured by the clamp 18. The clamp 18 forms part of the bracket 16, the bracket 16 for connecting the mirror assembly 12 to a vehicle wing mirror.

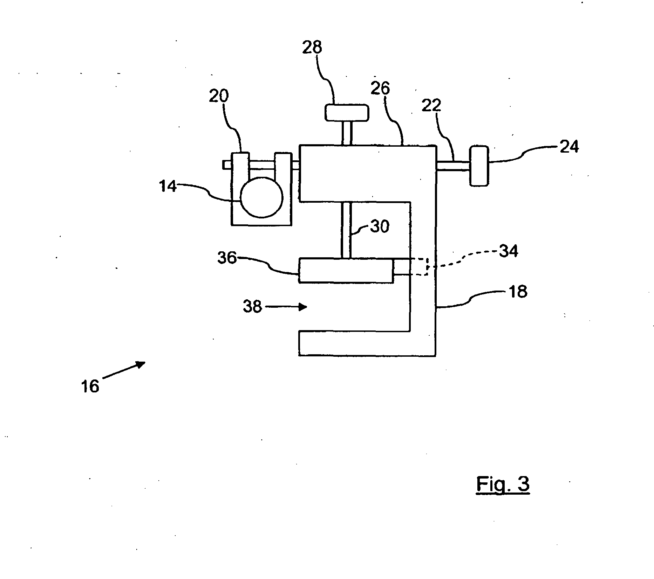

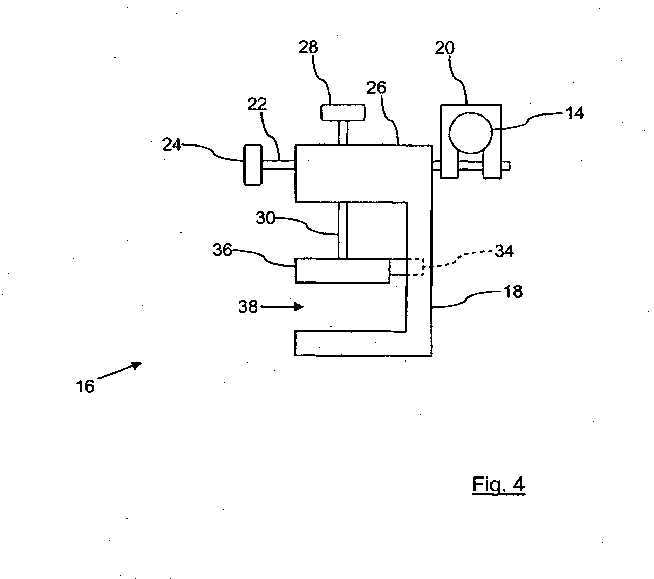

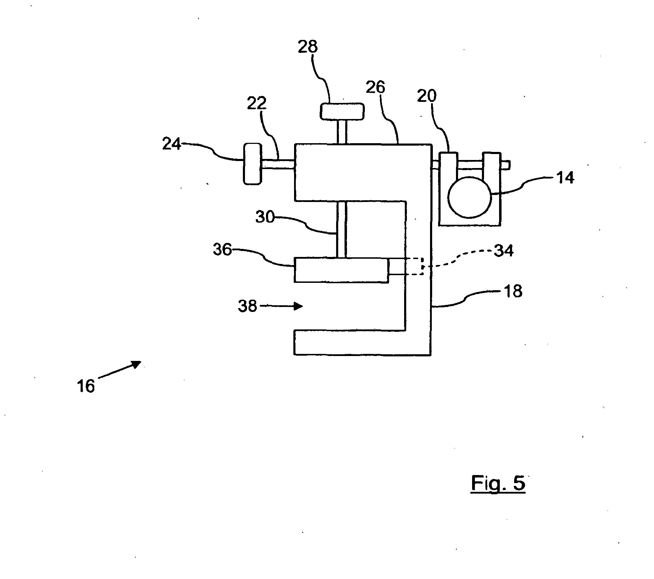

Figure 3 shows the bracket 16 mounted on the arm 14 in a manner different from that shown in Figure 2. In this arrangement, the shaft 22 is mounted above the arm 14, with the fixing portion 20 reversed (rotated 180 degrees), relative to the position in Figure 2. The design of the bracket 16 is such that a wide variety of different connection arrangements are possible, to suit the user, and design of wing mirror, to which the bracket 16 is being fixed. Figure 4 shows a further arrangement, with the bracket 16 connected so that the arm 14 is in front of the bracket 16. The shaft 22 is below the arm 14. A still further arrangement is shown in Figure 5, with shows a view similar to that of Figure 4, with the fixing portion 20 reversed (rotated 180 degrees), relative to the position shown in Figure 4.

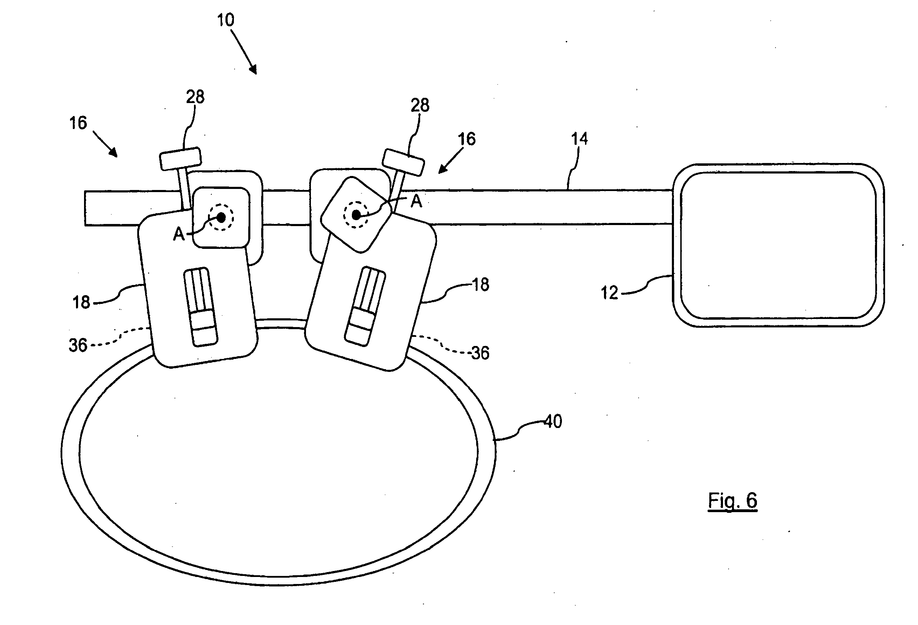

Figure 6 shows the apparatus 10 fixed to a vehicle wing mirror 40. Each of the clamps 18 of the two brackets 16 mounted on the arm 14 have been rotated in opposite directions about their respective axis's A. This rotation facilitates the fastening of the apparatus to the wing mirror 40. The lip of the mirror 40 is fixed between the respective engaging portions 36 of each clamp 18, and the user tightens the clamping member 28 to fasten the towing mirror 10 in place on the wing mirror 40.

## Claims

1. Apparatus comprising
• a mirror assembly (12),
• an arm (14) connected to the mirror assembly (12), and
• a bracket (16) mounted on the arm (14), the bracket (16) comprising a clamp (18) for connecting to a vehicle wing mirror (40),
**characterised in that** the clamp (18) is rotatable about an axis (A) substantially perpendicular to the arm (14) and the apparatus further comprises a second bracket (16) mounted on the arm (14), the second bracket (16) comprising a clamp (18) for connecting to a vehicle wing mirror (40), wherein the damp (18) is rotatable about an axis (A) substantially perpendicular to the arm (14).

2. Apparatus according to claim 1, wherein the bracket (16) includes a fixing portion (20) for connecting to the arm (14) and a shaft (22) connecting the clamp (18) to the fixing portion (20).

3. Apparatus according to claim 2, wherein the clamp (18) is rotatable about the shaft (22).

4. Apparatus according to claim 1, 2 or 3, wherein the bracket (16) includes a locking element (24) for preventing rotation of the clamp (18).

5. Apparatus according to any preceding claim, wherein the clamp (18) comprises a frame (26) and a movable clamping member (28), the clamping member (28) including an engaging portion (36).

6. Apparatus according to claim 5, wherein the engaging portion (36) is connected to a shaft (30) and is turnably mounted on the shaft (30).

7. Apparatus according to any preceding claim, wherein one of the frame (26) and the engaging portion (36) includes a guiding slot (32), and the other of the frame (26) and the engaging portion (36) includes a gliding element (34) engaging in the guiding slot (32).

## Patentansprüche

1. Vorrichtung umfassend
• eine Spiegelanordnung (12),
• einen Arm (14), welcher mit der Spiegelanordnung (12) verbunden ist, und
• eine Klammer (16), welche an dem Arm (14) montiert ist, wobei die Klammer (16) eine Klemme (18) zum Anschluss an einen Fahrzeugaußenspiegel (40) umfasst,
**dadurch gekennzeichnet, dass** die Klemme (18) um eine Achse (A), welche im Wesentlichen senkrecht zum Arm (14) ist, drehbar ist, und die Vorrichtung weiterhin eine zweite Klammer (16) umfasst, welche an dem Arm (14) montiert ist, wobei die zweite Klammer (16) eine Klemme (18) zum Anschluss an einen Fahrzeugaußenspiegel (40) umfasst, wobei die Klemme (18) um eine Achse (A), welche im Wesentlichen senkrecht zum Arm (14) ist, drehbar ist.

2. Vorrichtung nach Anspruch 1, wobei die Klammer (16) einen Befestigungsteil (20) zum Anschluss an den Arm (14) und eine Welle (22), welche die Klemme (18) mit dem Befestigungsteil (20) verbindet, enthält.

3. Vorrichtung nach Anspruch 2, wobei die Klemme (18) um die Welle (22) drehbar ist.

4. Vorrichtung nach Anspruch 1, 2 oder 3, wobei die Klammer (16) ein Blockierelement (24) zum Verhindern einer Drehung der Klemme (18) enthält.

5. Vorrichtung nach einem der vorhergehenden Ansprüche, wobei die Klemme (18) einen Rahmen (26) und ein bewegliches Klemmelement (28) umfasst, wobei das Klemmelement (28) einen Eingriffsteil (36) enthält.

6. Vorrichtung nach Anspruch 5, wobei der Eingriffsteil (36) mit der Welle (30) verbunden ist und drehbar an der Welle (30) montiert ist.

7. Vorrichtung nach einem der vorhergehenden Ansprüche, wobei eines der Elemente Rahmen (26) und Eingriffsteil (36) einen Führungsschlitz (32) enthält, und das andere der Elemente Rahmen (26) und Eingriffsteil (36) ein Führungselement (34) enthält, welches in den Führungsschlitz (32) eingreift.

## Revendications

1. Appareil comprenant
• un ensemble de rétroviseur (12),
• un bras (14) raccordé à un ensemble de rétroviseur (12), et
• un support (16) monté sur le bras (14), le support (16) comprenant un étrier de serrage (18) pour raccorder à un rétroviseur d'aile de véhicule (40),
**caractérisé en ce que** l'étrier de serrage (18) peut être tourné autour d'un axe (A) pour l'essentiel perpendiculaire au bras (14) et l'appareil comprend en plus un deuxième support (16) monté sur le bras (14), le deuxième support (16) comprenant un étrier de serrage (18) pour raccorder à un rétroviseur d'aile de véhicule (40), dans lequel l'étrier de serrage (18) peut tourner autour d'un axe (A) pour l'essentiel perpendiculaire au bras (14).

2. Appareil selon la revendication 1, dans lequel le support (16) comprend une partie de fixation (20) pour raccorder au bras (14) et un arbre (22) raccordant l'étrier de serrage (18) à la partie de fixation (20).

3. Appareil selon la revendication 2, dans lequel l'étrier de serrage (18) peut être tourné autour de l'arbre (22).

4. Appareil selon la revendication 1, 2 ou 3, dans lequel le support (16) comprend un élément de blocage (24) pour éviter la rotation de l'étrier de serrage (18).

5. Appareil selon l'une quelconque des revendications précédentes, dans lequel l'étrier de serrage (18) comprend un cadre (26) et un élément de serrage mobile (28), l'élément de serrage (28) comprenant une partie d'engagement (36).

6. Appareil selon la revendication 5, dans lequel la partie d'engagement (36) est raccordée à un arbre (30) et est montée de manière à pouvoir tourner sur l'arbre (30).

7. Appareil selon l'une quelconque des revendications précédentes, dans lequel d'une part le cadre (26) ou la partie d'engagement (36) comprend une fente de guidage (32) et d'autre part le cadre (26) ou la partie d'engagement (36) comprend un élément de guidage (34) s'engageant dans la fente de guidage (32) .
